# EUROPÄISCHE PATENTSCHRIFT

(11) **EP 3 769 887 B1**
(45) Veröffentlichungstag und Bekanntmachung des Hinweises auf die Patenterteilung: **15.04.2026**
(21) Anmeldenummer: 20186364.4
(22) Anmeldetag: 17.07.2020
(51) Int. Cl.: B23C 5/20

(54) **8-FACH WENDESCHNEIDPLATTE**
INDEXABLE INSERT WHICH CAN BE USED EIGHT TIMES
PLAQUETTE DE COUPE RÉVERSIBLE OCTUPLE

(30) Priorität: 22.07.2019 DE 102019210815
(43) Veröffentlichungstag der Anmeldung: 27.01.2021
(60) Teilanmeldung: 25221242.8
(73) Patentinhaber: Avantec Zerspantechnik GmbH, 75428 Illingen (DE)
(72) Erfinder: Werthwein, Gustav, 75428 Illingen (DE); Werthwein, Ulrich, 75428 Illingen (DE); Abel, Pierre, 75428 Illingen (DE)
(74) Vertreter: Grauel, Andreas

(56) Entgegenhaltungen:
- WO-A1-2008/138413
- WO-A1-2008/138414
- WO-A1-2016/113150
- WO-A1-2017/147630
- DE-U1- 8 529 043
- JP-A- 2008 229 744
- US-A1- 2008 226 403

## Beschreibung

### Technisches Gebiet

Die Erfindung betrifft eine 8-fach Wendeschneidplatte. Insbesondere für Zerspanungswerkzeuge.

### Stand der Technik

Bei Zerspanungswerkzeugen werden Schneidplatten mit einer Schneide eingesetzt, um Werkstücke bearbeiten zu können, insbesondere spanend zu bearbeiten. Dabei nutzt sich die Schneide ab, so dass sie nach einer vorgegebenen Nutzungsdauer unbrauchbar wird. Daher werden Wendeschneidplatten eingesetzt, welche eine Vielzahl von Schneiden aufweisen, damit nach Verschleiß einer ersten Schneide die Wendeschneidplatte nicht unbrauchbar wird, sondern die Wendeschneidplatte nur verdreht und/oder gewendet werden muss, um sie weiternutzen zu können. Eine 8-fach Wendeschneidplatte hat also 8 Schneiden, die nach und nach genutzt werden können, um so die Nutzungsdauer der Wendeschneidplatte gegenüber einer einfachen Schneidplatte zu verachtfachen. Eine solche Wendeschneidplatte ist beispielsweise aus der WO 2008/138414 A1 bekannt.

Dabei ist die Anordnung der Schneiden und deren Ausbildung für die Nutzung von Bedeutung.

### Darstellung der Erfindung, Aufgabe, Lösung, Vorteile

Es ist die Aufgabe der Erfindung, eine 8-fach Wendeschneidplatte zu schaffen, die einfach herzustellen ist und die in der Nutzung vorteilhaft ist, insbesondere beim Schneiden und bei dem Spanabtransport.

Die Aufgabe wird mit den Merkmalen von Anspruch 1 gelöst.

Ein Ausführungsbeispiel der Erfindung betrifft eine 8-fach Wendeschneidplatte mit einem Grundkörper mit zwei planparallelen Seitenflächen und vier umlaufenden Umfangsflächen, wobei eine zentrale Bohrung mit einer Mittelachse durch den Grundkörper von einer der Seitenflächen zu der anderen der Seitenflächen führt und wobei der Grundkörper etwa quaderförmig ausgebildet ist, wobei der Grundkörper sich in scheibenartige Bereiche unterteilen lässt, deren Funktionen dem Bearbeiten eines Werkstückes oder der Anlage der 8-fach Wendeschneidplatte dienen, wobei der Grundkörper entlang der Mittelachse in einen ersten Schneidbereich mit der ersten Seitenfläche, einen mittleren Anlagebereich und einen zweiten Schneidbereich mit der zweiten Seitenfläche aufgeteilt ist, wobei der erste Schneidbereich und der zweite Schneidbereich jeweils um einen definierten Winkel gegenüber dem Anlagebereich um die Mittelachse verdreht ist, wobei auch die Umfangsflächen jeweils in eine erste Schneidfläche, eine Anlagefläche und in eine zweite Schneidfläche unterteilt sind, so dass die vier Anlageflächen der Umfangsflächen den Anlagebereich bilden, die vier ersten Schneidflächen mit der ersten Seitenfläche den ersten Schneidbereich bilden und die vier zweiten Schneidflächen mit der zweiten Seitenfläche den zweiten Schneidbereich bilden, wobei jede der ersten und zweiten Schneidflächen eine Hauptschneide und eine Planschneide aufweisen, wobei sich die jeweilige Hauptschneide am Übergang zwischen einer Schneidfläche und einer Seitenfläche erstreckt und wobei sich die jeweilige Planschneide am Übergang der Schneidfläche zu einer benachbarten Schneidfläche erstreckt und wobei die Hauptschneide und die Planschneide jeder Schneidfläche ineinander übergehen und wobei die jeweilige Schneidfläche eine sich von der Planschneide entlang der Hauptschneide erstreckende Mulde aufweist zur Abführung und Formung von Spänen. Dadurch wird eine Wendeschneidplatte geschaffen, welche 8-fach nutzbar ist und die einfach in der Herstellung ist. Dies erlaubt eine kostengünstige Herstellung bei hohem Nutzen.

Dabei ist es vorteilhaft, dass die Planschneide einen geraden Bereich und einen bogenförmigen Bereich aufweist, wobei der bogenförmige Bereich in die Hauptschneide übergeht. Damit kann eine umfangreiche Nutzung der Planschneide und der Hauptschneide erreicht werden.

Vorteilhaft ist es auch, dass die Planschneide gegenüber der benachbart angeordneten Anlagefläche vorspringt. Dadurch ist eine freie Zugänglichkeit des zu bearbeitenden Werkstücks mit der Planschneide gegeben, so dass die Wendeschneidplatte für vielfältige Bearbeitungen geeignet ist.

Bei einem weiteren Ausführungsbeispiel ist es auch zweckmäßig, wenn zwischen der jeweiligen Hauptschneide und der benachbarten Seitenfläche eine Stützfase vorgesehen ist. Dadurch wird die Hauptschneide stabil ausgestaltet, so dass die Wendeschneidplatte langlebiger ist.

Bei einem weiteren Ausführungsbeispiel ist es auch vorteilhaft, wenn sich die Mulde ausgehend von der Planschneide bis hin zu einem rückseitigen Ende erstreckt, wobei das rückseitige Ende der Mulde von einem rückseitigen Ende der Schneidfläche entfernt ist. Dadurch wird eine ausreichend lange Mulde erzeugt und gleichzeitig wird der Endbereich für die Gestaltung der Planschneide der benachbarten Schneidfläche zur Verfügung gestellt.

Auch ist es vorteilhaft, wenn das rückseitige Ende der Mulde gekrümmt oder bogenförmig ausgebildet ist. Dadurch werden Späne abgeleitet, so dass sie in einer definierten Bahn von der Wendeschneidplatte entfernt wird.

Bei einem weiteren Ausführungsbeispiel ist es auch vorteilhaft, wenn das rückseitige Ende der Schneidfläche abgeschrägt und/oder abgerundet ist zur Ausbildung eines Eckenradius der Planschneide der benachbarten Schneidfläche. Dadurch wird die Planschneide besser zugänglich und erlaubt die Krümmung von der Planschneide zu der Hauptschneide als durchgehende Schneide.

Auch ist es vorteilhaft, wenn die Mulde im Bereich der Planschneide hin zur Anlagefläche offen ausgebildet ist und/oder sich in die benachbarte Anlagefläche erstreckt. Auch dieser Übergang von der Mulde zu der Anlagefläche dient dem erleichterten Abtransport von Spänen.

Bei einem weiteren Ausführungsbeispiel ist es auch vorteilhaft, wenn die beiden Schneidbereiche und der Anlagebereich jeweils im Schnitt betrachtet senkrecht zu der Mittelachse quadratisch ausgebildet sind. Dadurch wird eine definierte Symmetrie erreicht, die eine einfache Montage in allen Montagepositionen erlaubt.

Vorteilhaft ist es, wenn die Mulde eine im Schnitt bogenförmige Vertiefung ausbildet. Dadurch werden die Späne besser abgeführt.

Weitere vorteilhafte Ausgestaltungen sind durch die nachfolgende Figurenbeschreibung und durch die Unteransprüche beschrieben.

### Kurze Beschreibung der Zeichnungen

Nachstehend wird die Erfindung auf der Grundlage zumindest eines Ausführungsbeispiels anhand der Zeichnungen näher erläutert. Es zeigen:
- Figur 1: eine perspektivische schematische Darstellung einer erfindungsgemäßen 8-fach Wendeschneidplatte, und
- Figur 2: eine perspektivische Ansicht eines Halters mit einer Mehrzahl von erfindungsgemäßen 8-fach Wendeschneidplatten.

### Bevorzugte Ausführung der Erfindung

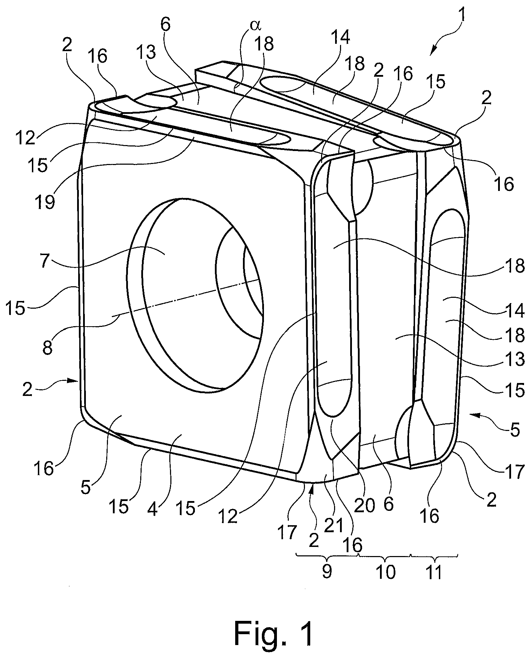

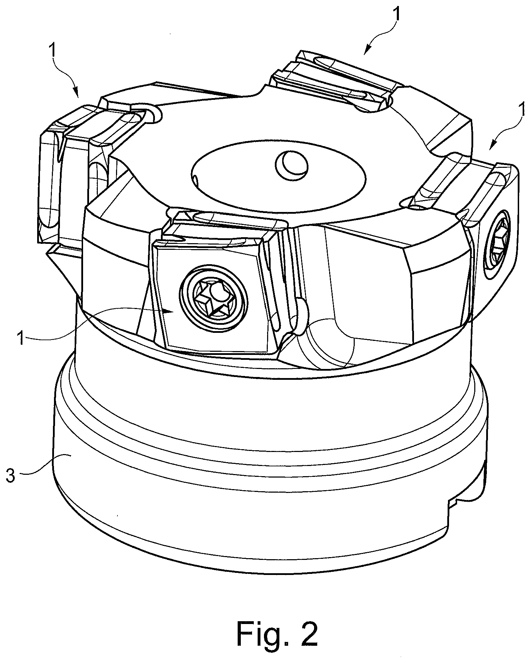

Die Figur 1 zeigt eine schematische, perspektivische Darstellung einer 8-fach Wendeschneidplatte 1. Dabei ist eine 8-fach Wendeschneidplatte 1 eine Schneidplatte mit einer 8-fachen Schneidenanordnung 2, die durch Drehen und Wenden in einem Halter 3, siehe Figur 2, 8-fach verwendbar ist, weil nach einer Nutzung und einem Verschleiß einer Schneidenanordnung 2 durch Drehen und Wenden eine der weiteren vorhandenen Schneidenanordnungen 2 für die Bearbeitung eines Werkstücks verwendbar ist. Da acht Schneidenanordnungen 2 vorgesehen sind, kann die 8-fach Wendeschneidplatte 1 entsprechend oft gedreht und gewendet werden, bis alle acht vorhandenen Schneidenanordnungen 2 benutzt und verschlissen sind.

Die Figur 1 zeigt die 8-fach Wendeschneidplatte 1 mit einem Grundkörper 4, welcher mit zwei planparallelen Seitenflächen 5 und vier umlaufenden Umfangsflächen 6 ausgebildet ist. Die beiden planparallelen Seitenflächen 5 liegen sich gegenüber und bilden Anlageflächen für die Anordnung der 8-fach Wendeschneidplatte 1 an einer Gegenanlagefläche des Halters 3. In Figur 1 ist nur die vordere Seitenfläche 5 zu erkennen, die hintere Seitenfläche, welche der vorne angeordneten Seitenfläche 5 gegenüber liegt, ist auf der abgewandten Seite angeordnet und daher in der Figur 1 auch nicht erkennbar.

Auch sind nur zwei der vier umlaufend angeordneten Umfangsflächen 6 zu erkennen. Die anderen nicht erkennbaren Umfangsflächen 6 sind durch den Grundkörper 4 selbst verdeckt.

Der Grundkörper 4 weist eine zentrale Bohrung 7 mit einer Mittelachse 8 auf, welche mittig durch den Grundkörper 4 von einer der Seitenflächen 5 zu der anderen der Seitenflächen 5 führt.

Insgesamt betrachtet ist der Grundkörper 4 etwa quaderförmig ausgebildet, wobei der Grundkörper 4 entlang der Mittelachse 8 in einen ersten Schneidbereich 9 mit der ersten Seitenfläche 5, einen mittleren Anlagebereich 10 und einen zweiten Schneidbereich 11 mit der zweiten Seitenfläche 5 aufgeteilt ist. Der Grundkörper 4 lässt sich so in quasi scheibenartige Bereiche 9, 10, 11 unterteilen, deren Funktion dem Schneiden bzw. Bearbeiten eines Werkstückes bzw. der definierten Anlage der 8-fach Wendeschneidplatte 1 dient. Die beiden Schneidbereiche 9, 11 und der Anlagebereich 10 sind jeweils im Schnitt betrachtet senkrecht zu der Mittelachse 8 etwa quadratisch ausgebildet.

Aus Figur 1 ist auch erkennbar, dass der erste Schneidbereich 9 und der zweite Schneidbereich 11 jeweils um einen definierten Winkel α gegenüber dem Anlagebereich 10 um die Mittelachse 8 verdreht sind.

Entsprechend sind auch die Umfangsflächen 6 jeweils in eine erste Schneidfläche 12, eine Anlagefläche 13 und in eine zweite Schneidfläche 14 unterteilt.

Dabei bilden die vier Anlageflächen 13 der Umfangsflächen 6 den jeweiligen Anlagebereich zur definierten Anlage der 8-fach Wendeschneidplatte 1 an einem Halter 3.

Weiterhin zeigt die Figur 1 ebenso, dass die vier ersten Schneidflächen 12 mit der ersten Seitenfläche 5 den ersten Schneidbereich 9 bilden und die vier zweiten Schneidflächen 14 mit der zweiten Seitenfläche 5 den zweiten Schneidbereich 11 bilden.

Die ersten und zweiten Schneidflächen 12, 14 sind dabei derart ausgebildet, dass jede der ersten und zweiten Schneidflächen 12, 14 eine Hauptschneide 15 und eine Planschneide 16 aufweist.

Dabei erstreckt sich die jeweilige Hauptschneide 15 am Übergang zwischen einer Schneidfläche 12, 14 und einer Seitenfläche 5. Also in Längsrichtung des Übergangs zwischen der jeweiligen Schneidfläche 12, 14 und der benachbart angeordneten Seitenfläche 5.

Die jeweilige Planschneide 16 erstreckt sich quasi als Fortführung der Hauptschneide 15 am Übergang der Schneidfläche 12, 14 zu einer benachbarten Schneidfläche 12, 14. Die Hauptschneide 15 und die Planschneide 16 einer Schneidfläche 12, 14 sind dabei derart ausgebildet, dass sie sich derart erstrecken, dass die Hauptschneide 15 und die Planschneide 16 jeder Schneidfläche 12, 14 ineinander übergehen. Dabei verlaufen die Hauptschneide 15 und die Planschneide 16 in ihrem geraden Schneidenverlauf jeweils in einem Winkel von etwa 90° zueinander und sie sind durch einen bogenförmigen Schneidenverlauf 17 der Planschneide 16 miteinander verbunden.

Gemäß der Erfindung weist die jeweilige Schneidfläche 12, 14 eine sich von der Planschneide 16 entlang der Hauptschneide 15 erstreckende Mulde 18 auf, welche zur Abführung und Formung von Spänen bei der Bearbeitung eines Werkstücks dient.

Wie es die Figur 1 zeigt, weist die Planschneide 16 einen geraden Bereich und einen bogenförmigen Bereich 17 auf, wobei der bogenförmige Bereich 17 in die Hauptschneide 15 übergeht.

Die Verdrehung der Schneidflächen 12, 14 zu der mittig angeordneten Anlagefläche 13 bewirkt, dass die jeweilige Planschneide 16 gegenüber der benachbart angeordneten Anlagefläche 13 vorspringt. So wird gewährleistet, dass die Planschneide 16 freisteht und ohne Interferenz der Anlagefläche 13 Werkstücke bearbeiten kann.

Figur 1 zeigt auch, dass zwischen der jeweiligen Hauptschneide 15 und der benachbarten Seitenfläche 12, 14 eine Stützfase 19 vorgesehen ist. Diese dient der Stabilität und Langlebigkeit der Hauptschneide 15.

Bei dem gezeigten Ausführungsbeispiel der Figur 1 erstreckt sich die Mulde 18 ausgehend von der Planschneide 16 bis hin zu einem rückseitigen Ende 20, wobei das rückseitige Ende 20 der Mulde 18 noch von einem rückseitigen Ende 21 der Schneidfläche 12, 14 entfernt ist. Dadurch wird ein Bereich geschaffen, der zwischen dem rückseitigen Ende 20 der Mulde 18 und dem rückseitigen Ende 21 der Schneidfläche 12, 14 liegt, welcher der Ausbildung der Planschneide 16 der benachbarten Schneidfläche 12, 14 dient.

Die Mulde 18 weist ein etwa bogenförmiges Profil auf, so dass sie quer zu ihrer Längsrichtung einen Verlauf hat, der etwa mittig seine größte Tiefe aufweist. Die Mulde 18 bildet also eine im Schnitt quer zu ihrer Längsrichtung bogenförmige Vertiefung aus.

Das rückseitige Ende der Mulde 18 ist gekrümmt oder bogenförmig ausgebildet, so dass eine gezielte Spanabführung effektiv durch die Krümmung bzw. die bogenförmige Gestalt erfolgen kann.

Weiterhin ist zu erkennen, dass die Mulde 18 im Bereich der Planschneide 16 hin zur seitlich daneben angeordneten Anlagefläche 13 offen ausgebildet ist und/oder sich in die benachbarte Anlagefläche 13 erstreckt. Dazu ist die Mulde 18 auch hin zur benachbart angeordneten Anlagefläche 13 gewölbt ausgebildet.

Auch ist das rückseitige Ende 21 der Schneidfläche 12, 14 gegenüber der Ebene der Schneidfläche 12, 14 abgeschrägt und/oder abgerundet zur Ausbildung eines Eckenradius der Planschneide 16 der benachbarten Schneidfläche 12, 14.

Die Figur 2 zeigt einen Halter 3, welcher vier 8-fach Wendeschneidplatten 1 aufnimmt, wie sie im Ausführungsbeispiel der Figur 1 gezeigt sind. Dabei dient die zentrale Bohrung 7 der Verschraubung der 8-fach Wendeschneidplatte 1 an dem Halter 3. Der Halter 3 weist für jede 8-fach Wendeschneidplatte 1 eine Aufnahme auf, welche einen Anlagebereich für die Anlagenbereiche 13 aufweist.

### Bezugszeichenliste

- 1: 8-fach Wendeschneidplatte
- 2: Schneidenanordnung
- 3: Halter
- 4: Grundkörper
- 5: planparallele Seitenfläche
- 6: umlaufende Umfangsfläche
- 7: Bohrung
- 8: Mittelachse
- 9: erster Schneidbereich
- 10: mittlerer Anlagebereich
- 11: zweiter Schneidbereich
- 12: erste Schneidfläche
- 13: mittige Anlagefläche
- 14: zweite Schneidfläche
- 15: Hauptschneide
- 16: Planschneide
- 17: Schneidenverlauf / bogenförmiger Bereich
- 18: Mulde
- 19: Stützfase
- 20: rückseitiges Ende der Mulde
- 21: rückseitiges Ende der Schneidfläche

## Patentansprüche

1. 8-fach Wendeschneidplatte (1) mit einem Grundkörper (4) mit zwei planparallelen Seitenflächen (5) und vier umlaufenden Umfangsflächen (6), wobei eine zentrale Bohrung (7) mit einer Mittelachse (8) durch den Grundkörper (4) von einer der Seitenflächen (5) zu der anderen der Seitenflächen (5) führt und wobei der Grundkörper (4) etwa quaderförmig ausgebildet ist, wobei der Grundkörper (4) sich in scheibenartige Bereiche unterteilen lässt, deren Funktionen dem Bearbeiten eines Werkstückes oder der Anlage der 8-fach Wendeschneidplatte (1) dienen, wobei der Grundkörper (4) entlang der Mittelachse (8) in einen ersten Schneidbereich (9) mit der ersten Seitenfläche (5), einen mittleren Anlagebereich (10) und einen zweiten Schneidbereich (11) mit der zweiten Seitenfläche (5) aufgeteilt ist, wobei der erste Schneidbereich (9) und der zweite Schneidbereich (11) jeweils um einen definierten Winkel gegenüber dem Anlagebereich (10) um die Mittelachse (8) verdreht ist, wobei auch die Umfangsflächen (6) jeweils in eine erste Schneidfläche (12), eine Anlagefläche (13) und in eine zweite Schneidfläche (14) unterteilt sind, so dass die vier Anlageflächen (13) der Umfangsflächen (6) den Anlagebereich (10) bilden, die vier ersten Schneidflächen (12) mit der ersten Seitenfläche (5) den ersten Schneidbereich (9) bilden und die vier zweiten Schneidflächen (14) mit der zweiten Seitenfläche (5) den zweiten Schneidbereich (11) bilden, wobei jede der ersten und zweiten Schneidflächen (12, 14) eine Hauptschneide (15) und eine Planschneide (16) aufweisen, wobei sich die jeweilige Hauptschneide (15) am Übergang zwischen einer Schneidfläche (12, 14) und einer Seitenfläche (5) erstreckt und wobei sich die jeweilige Planschneide (16) am Übergang der Schneidfläche (12, 14) zu einer benachbarten Schneidfläche (12, 14) erstreckt und wobei die Hauptschneide (15) und die Planschneide (16) jeder Schneidfläche (12, 14) ineinander übergehen und wobei die jeweilige Schneidfläche (12, 14) eine sich von der Planschneide (16) entlang der Hauptschneide (15) erstreckende Mulde (18) aufweist zur Abführung und Formung von Spänen.

2. 8-fach Wendeschneidplatte (1) nach Anspruch 1, **dadurch gekennzeichnet, dass** die Planschneide (16) einen geraden Bereich und einen bogenförmigen Bereich (17) aufweist, wobei der bogenförmige Bereich (17) in die Hauptschneide (15) übergeht.

3. 8-fach Wendeschneidplatte (1) nach Anspruch 1 oder 2, **dadurch gekennzeichnet, dass** die Planschneide (16) gegenüber der benachbart angeordneten Anlagefläche (13) vorspringt.

4. 8-fach Wendeschneidplatte (1) nach Anspruch 1, 2 oder 3, **dadurch gekennzeichnet, dass** zwischen der jeweiligen Hauptschneide (15) und der benachbarten Seitenfläche (5) eine Stützfase (19) vorgesehen ist.

5. 8-fach Wendeschneidplatte (1) nach Anspruch 1, 2, 3 oder 4, **dadurch gekennzeichnet, dass** sich die Mulde (18) ausgehend von der Planschneide (16) bis hin zu einem rückseitigen Ende erstreckt wobei das rückseitige Ende (20) der Mulde (18) von einem rückseitigen Ende (21) der Schneidfläche (12, 14) entfernt ist.

6. 8-fach Wendeschneidplatte (1) nach Anspruch 5, **dadurch gekennzeichnet, dass** das rückseitige Ende (20) der Mulde (18) gekrümmt oder bogenförmig ausgebildet ist.

7. 8-fach Wendeschneidplatte (1) nach einem der Ansprüche 5 oder 6, **dadurch gekennzeichnet, dass** das rückseitige Ende (21) der Schneidfläche (12, 14) abgeschrägt und/oder abgerundet ist zur Ausbildung eines Eckenradius der Planschneide (16) der benachbarten Schneidfläche (12, 14).

8. 8-fach Wendeschneidplatte (1) nach Anspruch 6, **dadurch gekennzeichnet, dass** die Mulde (18) im Bereich der Planschneide (16) hin zur Anlagefläche (13) offen ausgebildet ist und/oder sich in die benachbarte Anlagefläche (13) erstreckt.

9. 8-fach Wendeschneidplatte (1) nach einem der vorhergehenden Ansprüche, **dadurch gekennzeichnet, dass** die beiden Schneidbereiche (9, 11) und der Anlagebereich (10) jeweils im Schnitt betrachtet senkrecht zu der Mittelachse (8) quadratisch ausgebildet sind.

10. 8-fach Wendeschneidplatte (1) nach einem der vorhergehenden Ansprüche, **dadurch gekennzeichnet, dass** die Mulde (18) eine im Schnitt bogenförmige Vertiefung ausbildet.

## Claims

1. An indexable insert which can be used eight times (1) with a base body (4) with two plane-parallel side faces (5) and four circumferential peripheral faces (6), wherein a central core (7) with a central axis (8) through the base body (4) leads from one of the side faces (5) to the other one of the side faces (5) and wherein the base body (4) is formed to be approximately cuboid, wherein the base body (4) can be divided into disc-like regions, the functions of which serve the machining of a workpiece or the attachment of the indexable insert which can be used eight times (1), wherein the base body (4) is split into a first cutting region (9) with the first side face (5), a central attachment region (10) and a second cutting region (11) with the second side face (5) along the central axis (8), wherein the first cutting region (9) and the second cutting region (11) are each twisted about the central axis (8) in a defined angle with regard to the attachment region (10), wherein the peripheral faces (6) are also divided into a first cutting face (12), an attachment face (13) and into a second cutting face (14), respectively, so that the four attachment faces (13) of the peripheral faces (6) form the attachment region (10), the four first cutting faces (12) form the first cutting region (9) together with the first side face (5) and the four second cutting faces (14) form the second cutting region (11) together with the second side face (5), wherein each of the first and the second cutting faces (12, 14) has a main cutting edge (15) and a wiper cutting edge (16), wherein the respective main cutting edge (15) extends at the transition between a cutting face (12, 14) and a side face (5) and wherein the respective wiper cutting edge (16) extends at the transition of the cutting face (12, 14) to an adjacent cutting face (12, 14) and wherein the main cutting edge (15) and the wiper cutting edge (16) of each cutting face (12, 14) transition into one another and wherein the respective cutting face (12, 14) has a trough (18) extending from the wiper cutting edge (16) along the main cutting edge (15) for dissipating and forming chips.

2. The indexable insert which can be used eight times (1) according to claim 1, **characterised in that** the wiper cutting edge (16) has a straight region and an arc-shaped region (17), wherein the arc-shaped region (17) transitions into the main cutting edge (15).

3. The indexable insert which can be used eight times (1) according to claim 1 or 2, **characterised in that** the wiper cutting edge (16) protrudes with regard to the adjacently arranged attachment face (13).

4. The indexable insert which can be used eight times (1) according to claim 1, 2 or 3, **characterised in that** a support chamfer (19) is provided between the respective main cutting edge (15) and the adjacent side face (5).

5. The indexable insert which can be used eight times (1) according to claim 1, 2, 3 or 4, **characterised in that** the trough (18) extends starting from the wiper cutting edge (16) up to a rear end, wherein the rear end (20) of the trough (18) is away from a rear end (21) of the cutting face (12, 14).

6. The indexable insert which can be used eight times (1) according to claim 5, **characterised in that** the rear end (20) of the trough (18) is formed to be curved or arcuate.

7. The indexable insert which can be used eight times (1) according to any one of claims 5 or 6, **characterised in that** the rear end (21) of the cutting face (12, 14) is bevelled and/or rounded in order to form a corner radius of the wiper cutting edge (16) of the adjacent cutting face (12, 14).

8. The indexable insert which can be used eight times (1) according to claim 6, **characterised in that** the trough (18) is formed to be open in the region of the wiper cutting edge (16) to the attachment face (13) and/or extends into the adjacent attachment face (13).

9. The indexable insert which can be used eight times (1) according to any one of the preceding claims, **characterised in that** the two cutting regions (9, 11) and the attachment region (10) are each formed to be square-shaped as seen in section perpendicular to the central axis (8).

10. The indexable insert which can be used eight times (1) according to any one of the preceding claims, **characterised in that** the trough (18) forms a recess which is arcuate in section.

## Revendications

1. Octuple plaquette de coupe réversible (1) comprenant un corps de base (4) comportant deux surfaces latérales (5) planes et parallèles et quatre surfaces périphériques circulaires (6), où un perçage central (7) comportant un axe central (8) conduit, à travers le corps de base (4), d'une des surfaces latérales (5) à l'autre surface latérale (5), et où le corps de base (4) est configuré à peu près en forme de parallélépipède rectangle, où le corps de base (4) peut être subdivisé en zones en forme de disques dont les fonctions servent à l'usinage d'une pièce d'usinage ou au positionnement de l'octuple plaquette de coupe réversible (1), où le corps de base (4) est subdivisé, le long de l'axe central (8), en une première zone de coupe (9) avec la première surface latérale (5), en une zone de contact centrale (10) et en une deuxième zone de coupe (11) avec la deuxième surface latérale (5), où la première zone de coupe (9) et la deuxième zone de coupe (11) sont, respectivement, sollicitées en torsion autour de l'axe central (8), suivant un angle défini par rapport à la zone de contact (10), où les surfaces périphériques (6) sont également subdivisées, respectivement, en une première surface de coupe (12), en une surface de contact (13) et en une deuxième surface de coupe (14), de sorte que les quatre surfaces de contact (13) des surfaces périphériques (6) forment la zone de contact (10), les quatre premières surfaces de coupe (12) forment, avec la première surface latérale (5), la première zone de coupe (9), et les quatre deuxièmes surfaces de coupe (14) forment, avec la deuxième surface latérale (5), la deuxième zone de coupe (11), où chacune des première et deuxième surfaces de coupe (12, 14) présente une arête de coupe principale (15) et une arête de planage (16), où l'arête de coupe principale respective (15) s'étend au niveau de la transition entre une surface de coupe (12, 14) et une surface latérale (5), et où l'arête de planage respective (16) s'étend au niveau de la transition de la surface de coupe (12, 14) vers une surface de coupe adjacente (12, 14), et où l'arête de coupe principale (15) et l'arête de planage (16) de chaque surface de coupe (12, 14) se fondent l'une dans l'autre, et où la surface de coupe respective (12, 14) présente, à partir de l'arête de planage (16), une cuvette (18) s'étendant le long de l'arête de coupe principale (15), ladite cuvette servant à l'évacuation et à la formation de copeaux.

2. Octuple plaquette de coupe réversible (1) selon la revendication 1, **caractérisée en ce que** l'arête de planage (16) présente une section droite et une section (17) en forme d'arc, où la section (17) en forme d'arc se transforme en arête de coupe principale (15).

3. Octuple plaquette de coupe réversible (1) selon la revendication 1 ou 2, **caractérisée en ce que** l'arête de planage (16) est en saillie par rapport à la surface de contact (13) disposée de façon adjacente.

4. Octuple plaquette de coupe réversible (1) selon la revendication 1, 2 ou 3, **caractérisée en ce qu'**il est prévu un biseau de support (19) entre l'arête de coupe principale respective (15) et la surface latérale adjacente (5).

5. Octuple plaquette de coupe réversible (1) selon la revendication 1, 2, 3 ou 4, **caractérisée en ce que** la cuvette (18) s'étend à partir de l'arête de planage (16) jusqu'à une extrémité arrière, où l'extrémité arrière (20) de la cuvette (18) est éloignée d'une extrémité arrière (21) de la surface de coupe (12, 14).

6. Octuple plaquette de coupe réversible (1) selon la revendication 5, **caractérisée en ce que** l'extrémité arrière (20) de la cuvette (18) est configurée de manière incurvée ou en forme d'arc.

7. Octuple plaquette de coupe réversible (1) selon l'une des revendications 5 ou 6, **caractérisée en ce que** l'extrémité arrière (21) de la surface de coupe (12, 14) est biseautée et/ou arrondie pour la formation d'un rayon d'angle de l'arête de planage (16) de la surface de coupe adjacente (12, 14).

8. Octuple plaquette de coupe réversible (1) selon la revendication 6, **caractérisée en ce que** la cuvette (18) est configurée de façon ouverte dans la zone allant de l'arête de planage (16) jusqu'à la surface de contact (13) et/ou ladite cuvette s'étend dans la surface de contact adjacente (13).

9. Octuple plaquette de coupe réversible (1) selon l'une quelconque des revendications précédentes, **caractérisée en ce que** les deux zones de coupe (9, 11) et la zone de contact (10), vues respectivement en coupe perpendiculairement à l'axe central (8), sont configurées en étant de forme carrée.

10. Octuple plaquette de coupe réversible (1) selon l'une quelconque des revendications précédentes, **caractérisée en ce que** la cuvette (18), vue en coupe, forme une cavité en forme d'arc.
